# NEUE EUROPÄISCHE PATENTSCHRIFT

(11) **EP 1 615 238 B2**
(45) Veröffentlichungstag und Bekanntmachung des Hinweises auf die Entscheidung über den Einspruch: **12.06.2013**
(45) Hinweis auf die Patenterteilung: 09.09.2009
(21) Anmeldenummer: 05106121.6
(22) Anmeldetag: 06.07.2005
(51) Int. Cl.: H01B 3/00, C09J 7/02, C09J 7/04

(54) **Thermisch isolierendes technisches Klebeband sowie Kabelbaum hoher Temperaturbeständigkeit**
Thermically insulting technical adhesive tape and cable bundle having high temperature resistance
Ruban adhesive technique ayant une isolation thermique et faisceau de cables ayant une resistance thermique elevee

(30) Priorität: 10.07.2004 DE 202004010832 U; 21.07.2004 DE 202004011400 U
(43) Veröffentlichungstag der Anmeldung: 11.01.2006
(73) Patentinhaber: Coroplast Fritz Müller GmbH & Co. KG, 42279 Wuppertal (DE)
(72) Erfinder: LODDE, Christoph, 44229 Dortmund (DE); FRIGGE, Christoph, 45549 Sprockhövel (DE); POLSTER, Bernd, 42113, Wuppertal (DE)
(74) Vertreter: Patentanwälte Dr. Solf & Zapf

(56) Entgegenhaltungen:
- EP-A- 0 647 691
- EP-A2- 0 995 782
- WO-A1-03/033611
- US-A- 4 533 784
- US-A- 4 746 767

## Beschreibung

Die Erfindung betrifft ein thermisch isolierendes technisches Klebeband, vorzugsweise zum Umhüllen von langgestrecktem Gut, wie insbesondere Leitungen oder Kabelsätzen, mit einem bandförmigen Träger, der aus einem Verbund von mindestens einer ersten Schicht und einer zweiten Schicht besteht, wobei die erste Schicht eine metallische Schicht ist, und mit einer zumindest auf einer Seite des Trägers aufgebrachten druckempfindlichen Klebebeschichtung gemäß dem Oberbegriff des Anspruchs 1.

Des Weiteren betrifft die Erfindung einen Kabelbaum, umfassend mehrere, jeweils mit einer Isolierung versehene, inbesondere elektrische, Leitungen und ein Klebeband, mit dem diese Leitungen umwickelt sind gemäß dem Oberbegriff des Anspruchs 14.

Zum Nachweis der Erfüllung der bestehenden Anforderungen durch einen Werkstoff sind für elektrische Leitungen und weitere Komponenten für Kabelsätze verschiedene Prüfungen und Tests vorgeschrieben, die u.a. in einer, unter verschiedenen Pkw-Herstellern abgestimmten Werksnorm zusammengefaßt sind (LV 112 - Niederspannungsleitungen für Kraftfahrzeuge, Fassung vom Juni 2004). Entsprechend dieser Norm muß der Isolationswerkstoff der Leitungen den Anforderungen der VDA 231-106 entsprechen. Die minimale und maximale Dauergebrauchstemperatur (T_{U} und T_{O}) für eine Beanspruchungsdauer von 3 000 h liegen beispielsweise bei einer Einordnung in die Temperaturklasse B bei - 40 °C und bei 100 °C (für PVC als Isolationsmaterial bei 105 °C), wobei das Material einer Kurzzeittemperatur (240 Stunden) von 125 ± 3 °C und einer Überlasttemperatur (6 Stunden) von 150 ± 3 °C standhalten muß.

Eine vollständige Übersicht der Einteilung der elektrische Leitungen und weiteren Komponenten für Kabelsätze werden in der Automobilindustrie zur Festlegung ihrer maximalen Dauergebrauchstemperatur in Temperaturklassen eingeteilt. Diese Einteilung in Temperaturklassen enthält die nachstehende Tabelle 1.

**Tabelle 1**

| Klasse | Dauergebrauchstemperatur T_{U} bis T_{O} in °C | Kurzzeittemperatur (T_{O} + 25) °C | Temperatur für thermische Überlast (T_{O} + 50) °C |
|---|---|---|---|
| A | - 40 bis 85 | 110 ± 2 | 135 ± 3 |
| B | - 40 bis 100 | 115 ± 3 | 150 ± 3 |
| C | - 40 bis 125 | 150 ± 3 | 175 ± 3 |
| D | - 40 bis 150 | 175 ± 3 | 200 ± 3 |
| E | - 40 bis 175 | 200 ± 3 | 225 ± 3 |
| F | - 40 bis 200 | 225 ± 4 | 250 ± 4 |
| G | - 40 bis 225 | 250 ± 4 | 275 ± 4 |
| H | - 40 bis 250 | 275 ± 4 | 300 ± 4 |

Preisgünstige Leitungen sind meist nur für Temperaturbereiche bis 105 °C oder 125 °C, also die Temperaturklassen A bis C, zugelassen. Leitungen für Beanspruchungsbereiche oberhalb 150 °C (Temperaturklasse E und höher) sind nur mit teuren Isolationswerkstoffen, wie ETFE, FEP oder Silikon, erhältlich.

Zur Bündelung von Kabelsätzen werden die einzelnen Leitungen häufig mit Klebebändern umwickelt. Diese bieten je nach Ausführungsform meist noch einen zusätzlichen Nutzen, wie z.B. die Dämpfung unerwünschter Vibrations- und/oder Klappergeräusche oder einen erhöhten Abriebschutz. Einen Schutz gegen Hitzestrahlung bieten derartige Klebebänder jedoch nicht.

Der Schutz gegen Strahlungswärme erfolgt in der Regel durch Isolationsschichten mit einem geringen Wärmeleitvermögen. Bei Kabelsätzen wird zu diesem Zweck häufig auf temperaturbeständige Umhüllungen wie Wellrohre, Silikonschläuche oder metallarmierte Glasgewebeschläuche (z.B. HTI-Schlauch der Fa. FFA-Automotive) zurückgegriffen, die aber für höhere Belastungen keinen ausreichenden Schutz bieten.

Für Spezialanwendungen existieren darüber hinaus sogenannte Hitzereflektionsbänder, bei denen es sich um Klebebänder der eingangs genannten Art handelt. Diese Bänder bestehen aus einem Glasfasergewebe (zweite Trägerschicht), das mit einer Aluminiumfolie (erste Trägerschicht) kaschiert und rückseitig mit einem hoch temperaturbeständigen Silikonklebstoff ausgerüstet ist. Derartige Produkte werden z.B. von den Firmen Tyco und Aremco, New York, angeboten. Als Produktnachteile sind bei diesen Bändern jedoch eine schlechte Abriebbeständigkeit, fehlende Geräuschdämpfungseigenscharten sowie der im Vergleich zu korventionellen Klebebändern extrem hohe Preis zu nennen, der den hohen Herstellungsaufwand widerspiegelt. Der Preis beruht dabei einerseits auf dem Einsatz des aufwändigen, aus Aluminiumfolie und Glasfasergewebe bestehenden Verbundträgers und auf der Verwendung eines kostenintensiv hergestellten Silikonklebstoffs.

Schützt man einen Kabelsatz mit Hilfe von Hitzeschutzschläuchen oder -taschen oder durch Bewicklung mit einem Hitzeschutzband, so wird dadurch der Einsatz in Bereichen höherer Temperatur möglich. Der Schutz von mit geringem Aufwand herstellbaren und daher zu niedrigem Preis zu fertigenden Kabelsätzen erweist sich dabei aber als nicht wirtschaftlich, weil die Kosten für die erwähnten Hitzeschutzmaßnahmen noch deutlich höher liegen als diejenigen für den Einsatz von Leitungen einer höheren Temperaturklasse.

Ein technisches Klebeband mit einem Grundaufbau der eingangs genannten Art ist aus der US-A-4 746 767 bekannt. Es handelt sich dabei nicht um ein Klebeband, das dazu dient, einen Kabelbaum hoher Temperaturbeständigkeit herzustellen, sondern das eine Kabelabschirmung gegen Streufelder, insbesondere gegen Strahlung und elektrische Störströme gewährleisten soll. Eine in dem Dokument als zweite Schicht des Trägers genannte Polyesterfolie spielt unter diesem Gesichtspunkt eine Rolle insbesondere im Hinblick auf ihre dielektrischen, nicht im Hinblick auf ihre thermischen Eigenschaften. So wird für den Klebstoff in D1 eine Beständigkeit von 230 °F (110 °C) angegeben, die die Belastbarkeit des bekannten Verbundmaterials begrenzt.

Der vorliegenden Erfindung liegt die Aufgabe zugrunde, ein thermisch isolierendes technisches Klebeband der eingangs genannten Art, das eine hoch hitzeabschirmende Wirkung aufweist, im Vergleich mit den bekannten Hitzeschutzbändern jedoch einen geringeren Herstellungsaufwand erfordert, sowie einen Kabelbaum, der aus einem mit einem derartigen Klebeband umwickelten Kabelsatz besteht, zu schaffen. Die Erfindung soll es insbesondere mit minimalem Aufwand ermöglichen, bei Vorhandensein einer wenig temperaturbeständigen Isolierung der Leitungen in einem Kabelsatz den Einsatz eines daraus hergestellten Kabelbaums auch in Bereichen höherer Temperaturen unter Erfüllung des vorliegenden Anforderungsprofils zu gewährleisten. Schließlich soll es darüber hinaus möglich sein, bedarfsweise weitere, zusätzlich zur angestrebten Hitzeabschirmung vorliegende Produktvorteile, wie eine hohe Abriebbeständigkeit und Geräusctidämpfung, zu erzielen.

Erfindungsgemäß wird dies dadurch erreicht, daß die zweite Schicht des Trägers aus einem bis zu einer Temperatur von mindestens 175 °C beständigen textilen Trägermaterial besteht, wie dies im Kennzeichen des Anspruchs 1 definiert ist.

Durch den Einsatz des erfindungsgemäß ausgebildeten Trägermaterials gelingt es - insbesondere in Verbindung mit einem temperaturbeständigen, UV-vernetzenden Acrylatklebstoff - ein Klebeband herzustellen, daß die oben genannten Nachteile des Standes der Technik überwindet. Insbesondere ist es erfindungsgemäß möglich, ein mit geringem Aufwand herstellbares und damit preisgünstiges Hitzeschutzband zu realisieren, das bei hoher Funktionalität einen Einsatz in Kombination mit Leitungsmaterialien niedriger Temperaturklassen ermöglicht. So können beispielsweise erfindungsgemäß in einem Kabelbaum ETFE- oder FEP-Leitungen der Temperaturklassen D bis F gemäß der o.g. Norm durch mit geringerem technologischen Aufwand zu fertigende Kabel aus PVC, PP oder aus strahlenvernetztem PE ersetzt werden.

In einer besonderen Ausführungsform kann der Träger noch einseitig silikonisiert sein, so daß sie die Herstellung eines auf sich selbst gewickelten Klebebandes ermöglicht. Des Weiteren ist es auch möglich, eine Aluminiumfolie auf einen Gewebeträger, z.B. ein handelsübliches textiles, ebenfalls bevorzugt aus Polyester bestehendes Gewebe oder Vlies, zu kaschieren.

Im Allgemeinen zur Beschichtung von Geweben geeignete Klebstoffe auf der Basis von Natur- oder Synthesekautschuk sind für den erfindungsgemäß vorgesehenen Anwendungsfall nur eingeschränkt geeignet, da sie aufgrund ihres ungesättigten chemischen Charakters nicht die erforderliche Temperaturbeständigkeit aufweisen. Die geforderte Hitzestabilität kann jedoch vorteilhafterweise unter Vermeidung des Einsatzes von Silikonklebstoffen durch Klebstoffe auf der Basis von Polyacrylaten gewährleistet werden. Beispielsweise können mit Vorteil handelsübliche Rohstoffe der Produktreihe AcResin der Fa. BASF eingesetzt werden, bei denen es sich um UV-vernetzbare Polyacrylate handelt.

Weitere vorteilhafte Ausgestaltungsmerkmale der Erfindung sind in den Unteransprüchen sowie der folgenden Beschreibung enthalten.

Anhand dreier Ausführungsbeispiele soll im Folgenden die Erfindung näher erläutert werden. Dabei zeigen:
- Fig. 1: einen Schnitt durch ein erfindungsgemäßes thermisch isolierendes technisches Klebeband,
- Fig. 2: eine Ansicht eines erfindungsgemäßen Kabelbaumes,
- Fig. 3: eine perspektivische Ansicht einer zur Messung der Wärmeabschirmung eingesetzten Apparatur mit Darstellung eines erfindungsgemäßen Kabelbaumes,
- Fig. 4: eine diagrammatische Darstellung von vergleichenden Wärmeabschirmungsuntersuchungen von bekannten und erfindungsgemäßen Kabelsätzen.

In den verschiedenen Figuren der Zeichnung sind gleiche Teile stets mit denselben Bezugszeichen versehen, so daß sie in der Regel auch jeweils nur einmal beschrieben werden.

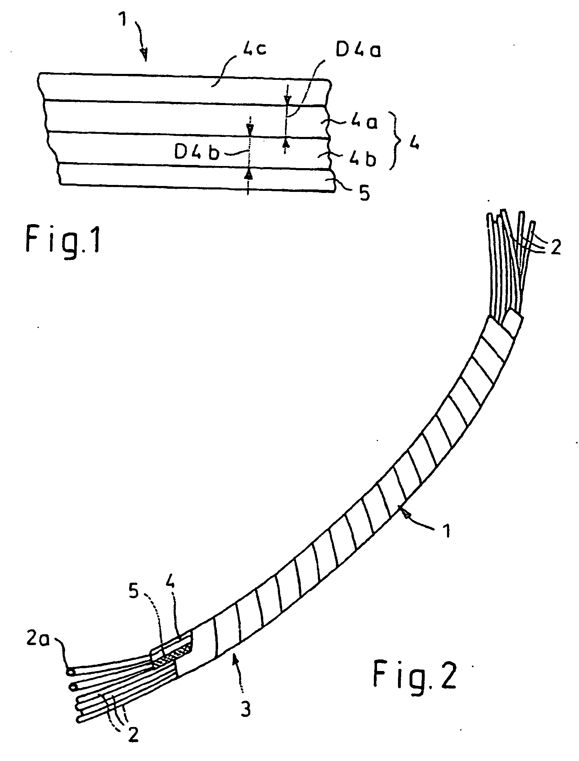

Wie sich zunächst aus Fig. 1 ergibt, umfaßt ein erfindungsgemäßes thermisch isolierendes technisches Klebeband 1, das - wie Fig. 2 zeigt - vorzugsweise zum Umhüllen von langgestrecktem Gut, wie insbesondere Leitungen 2 oder Kabelsätzen, zur Bildung eines Kabelbaumes 3 dient, einen bandförmigen Träger 4, der aus einem Verbund von mindestens einer ersten Schicht 4a und einer zweiten Schicht 4b besteht. Dabei ist die erste der Schichten 4a, 4b eine metallische Schicht 4a, und auf die zweite Schicht 4b des Trägers 4 ist eine druckempfindliche Klebebeschichtung 5 aufgebracht. Die zweite Schicht 4b des Trägers 4 besteht aus einem temperaturbeständigen textilen Trägermaterial. Dabei wird erfindungsgemäß unter "temperaturbeständig" verstanden, daß das Material eine Schmelztemperatur von mehr als 175 °C, vorzugsweise von mehr als 200 °C aufweist.

Wie sich aus Fig. 2 ergibt, umfaßt ein erfindungsgemäßer Kabelbaum 3 mehrere, jeweils mit einer Isolierung 2a versehene, inbesondere elektrische, Leitungen 2 und ein erfindungsgemäßes Klebeband 1, mit dem diese Leitungen 2 umwickelt sind. Der erfindungsgemäße Kabelbaum 3 weist dabei insbesondere eine hohe Temperaturbeständigkeit auf, wobei die Isolierungen 2a der Leitungen nur eine Temperaturbeständigkeit gemäß der Temperaturklasse A bis C aufzuweisen brauchen und insbesondere aus einem thermoplastischen Kunststoff, wie PVC oder PP, bestehen können.

Die Bestimmung der thermischen Abschirmwirkung eines erfindungsgemäßen Kabelbaumes 3 mit den in den nachfolgend beschriebenen Beispielen 1 bis 3 charakterisierten erfindungsgemäßen Klebebändern 1 erfolgte entsprechend der US-Norm SAE J2302 "Thermal effectiveness of sleeve insulation".

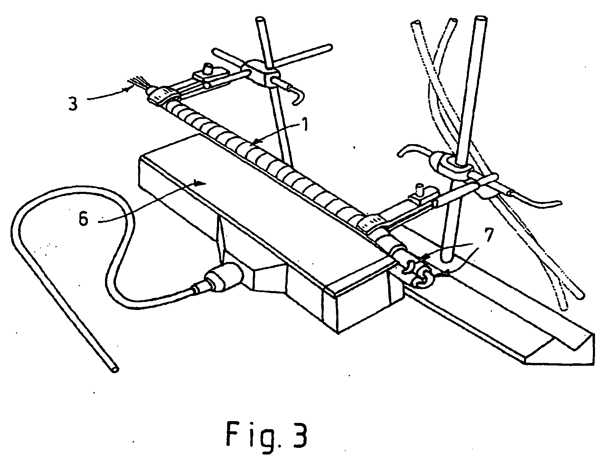

Die dafür eingesetzte, in Fig. 3 dargestellte Apparatur besteht aus einem oben offenen Kasten, in dem sich unten ein Wärmestrahler 6 befindet. Oberhalb der Strahlungsquelle wird die Probe befestigt, im vorliegenden Fall der mit dem erfindungsgemäßen Klebeband 1 umhüllte erfindungsgemäße Kabelbaum 3 oder ein als Vergleichsobjekt herangezogener Kabelbaum mit bekannter Umhüllung. An der Probe befindet sich ein Thermofühler 7 innerhalb und ein Thermofühler 7 außerhalb der zu prüfenden Umhüllung. Gemessen wird die Temperaturdifferenz zwischen den Thermofühlern 7. Je größer die Temperaturdifferenz ist, desto besser ist die abschirmende Wirkung der Umhüllung. Die Messung wird bei verschiedenen Abständen zwischen Strahlungsquelle und Probe (z.B. 15, 25, 40 und 60 mm) und verschiedenen Strahlungstemperaturen (z.B. 350 °C und 538 °C (1000 °F)) durchgeführt.

Folgende Klebebänder 1 bzw. Kabelbäume 3 wurden exemplarisch hergestellt und untersucht.

### Beispiel 1 (nicht erfindungsgemäß zum Vergleich):

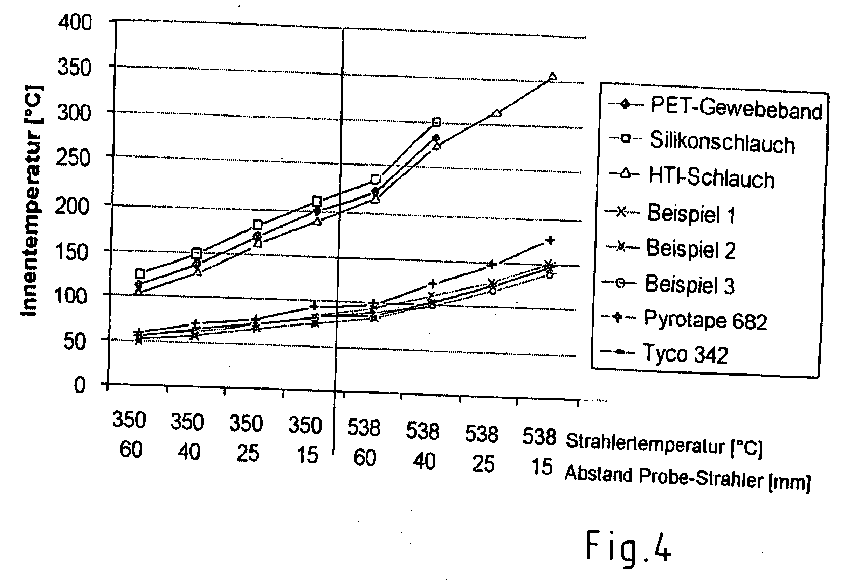

Eine handelsübliche Verbundfolie aus 12 µm dickem Aluminium (Dicke D4a) als erster Schicht 4a des Trägers 4 und 12 µm dickem Polyester (Dicke D4b) als zweiter Schicht 4b des Trägers 4 wird auf der Aluminiumseite mit ca. 1 g/m² silikonisiert (silikonisierte Schicht 4c) und anschließend auf der Polyesterseite mit ca. 35 g/m² eines UV-härtenden Acrylatklebstoffs beschichtet. Nach einer UV-Bestrahlung, wodurch die Klebebeschichtung 5 vollständig ausgebildet wird, wird das Material auf sich selbst gewickelt und kann in gewünschter Weise als auf sich selbst gewickeltes Klebeband 1 konfektioniert werden. Das Produkt hat eine zur Bewicklung von Kabelsätzen 3 ausreichende Zugfestigkeit, beispielsweise eine Reißfestigkeit in Längsrichtung von mindestens 15 N/cm, vorzugsweise im Bereich von 15 bis 70 N/cm, ist zumindest in Querrichtung handreißbar und besitzt die in Fig. 4 gezeigte hohe thermische Abschirmwirkung, die bedeutend höher liegt als die eines PET-Gewebebandes oder eines Silikonschlauches und etwa die gleichen Werte aufweist wie die von Spezialhitzereflektionsbändern, wie Pyrotape 682 bzw. Tyco 342 der eingangs genannten Hersteller.

### Beispiel 2 (erfindungsgemäß):

Eine Aluminiumfolie der Dicke D4a 38 µm wird - als erste Schicht 4a des Trägers 4 - zur Bildung der Klebebeschichtung 5 mit ca. 35 g/m² eines UV-härtenden Acrylatklebstoffs beschichtet. Nach der UV-Bestrahlung wird das Material auf ein - ebenfalls mit einem UV-härtenden Acrylatklebstoff beschichtetes, die zweite Schicht 4b des Trägers 4 bildendes - PET-Gewebe mit einem Flächengewicht von 130 g/m² kaschiert und dann aufgewickelt. Die so erhaltene Mutterrolle kann in gewünschter Weise als auf sich selbst gewickeltes Klebeband 1 konfektioniert werden. Das Produkt hat eine zur Bewicklung von Kabelsätzen ausreichende Zugfestigkeit, bietet - wie aus der nachstehenden Tabelle 2 hervorgeht - einen guten Schutz gegen Abrieb und besitzt die in Fig. 4 gezeigte hohe thermische Abschirmwirkung, die bedeutend höher liegt als die eines PET-Gewebebandes oder eines Silikonschlauches und etwa die gleichen Werte aufweist wie die von Spezialhitzereflektionsbändern, wie Pyrotape 682 bzw. Tyco 342 der eingangs genannten Hersteller.

**Tabelle 2: Abriebbeständigkeit verschiedener Hitzeschutzbänder nach ISO 6722**

| Klebeband | Anzahl der Hübe bei einlagiger Messung |
|---|---|
| Beispiel 1 | 0-2 |
| Beispiel 2 | 1500 - 2000 |
| Pyrotape 682-HR | 10 - 20 |
| Tyco Polyken 342 | 5 - 10 |

### Beispiel 3 (erfindungsgemäß):

Eine Aluminiumfolie der Dicke D4a 38 µm wird - als erste Schicht 4a des Trägers 4 - zur Bildung der Klebebeschichtung 5 mit ca. 35 g/m² eines UV-härtenden Acrylatklebstoffs beschichtet. Nach der UV-Bestrahlung wird das Material auf ein - ebenfalls mit einem UV-härtenden Acrylatklebstoff beschichtetes, die zweite Schicht 4b des Trägers 4 bildendes - PET-Nähvlies mit einem Flächengewicht von 200 g/m² kaschiert und danach aufgewickelt. Die so erhaltene Mutterrolle kann in gewünschter Weise als auf sich selbst gewickeltes Klebeband 1 konfektioniert werden. Das Produkt hat eine zur Bewicklung von Kabelsätzen ausreichende Zugfestigkeit, ist handreißbar und besitzt die in Abb. 4 gezeigte hohe thermische Abschirmwirkung, die bedeutend höher liegt als die eines PET-Gewebebandes oder eines Silikonschlauches und etwa die gleichen Werte aufweist wie die von Spezialhitzereflektionsbändern, wie Pyrotape 682 bzw. Tyco 342 der eingangs genannten Hersteller. Wie aus der nachstehenden Tabelle 3 hervorgeht, weist das erfindungsgemäße Klebeband 3 außerdem exzellente geräuschdämpfende Eigenschaften auf.

**Tabelle 3: Geräuschdämpfung verschiedener Hitzeschutzbänder nach BMW GS 95008-3**

| Klebeband | Geräuschdämpfung bei einlagiger Messung |
|---|---|
| Beispiel 1 | 0 - 0,5 |
| Beispiel 3 | 5 - 6 |
| Pyrotape 682-HR | 0 - 0,5 |
| Tyco Polyken 342 | 0 - 0,5 |

Die Erfindung ist nicht auf die beschriebenen Ausführungsbeispiele beschränkt, sondern umfaßt auch alle im Sinne der Erfindung gleichwirkenden Ausführungen. So können beispielsweise die Grammatur der Klebebeschichtung 5 sowie die Dicken D4a und D4b der Schichten 4a, 4b des Trägers 4 bzw. die Grammaturen der in der zweiten Schicht 4b verwendeten Textilien von denen der Beispiele abweichen.

Die erste Schicht 4a des Trägers 4 kann auch aus aufgedampften Aluminium mit einer Dicke D4a im Bereich von 5 nm bis 50 nm bestehen.

Insbesondere wird es für die Ausbildung der gewünschten Eigenschaften als optimal angesehen, wenn die Klebebeschichtung 5 mit einer Grammatur von nicht mehr als 120 g/m², vorzugsweise von 50 g/m² bis 100 g/m²auf den Träger 4 aufgebracht ist.

Des Weiteren ist es unter dem gleichen Aspekt vorteilhaft, wenn die zweite Schicht 4b des Trägers 4 ein Flächengewicht im Bereich von 40 g/m² bis 150 g/m² bei Verwendung eines Gewebes und ein Flächengewicht im Bereich von 40 g/m² bis 220 g/m² bei Verwendung eines Vlieses aufweist.

Die Grammatur der optional vorhandenen Silikonisierung 4c kann mit Vorteil im Bereich von 0,5 g/m² bis 1,5 g/m² liegen.

Im Sinne einer hohen Hitzebeständigkeit kann es vorgesehen sein, daß der Träger 4 und/oder die Klebebeschichtung 5, beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet ist/sind.

### Bezugszeichen

- 1: Klebeband
- 2: Leitung
- 2a: Isolierung von 2
- 3: Kabelbaum
- 4: Träger von 1
- 4a: erste Schicht von 4
- 4b: zweite Schicht von 4
- 4c: silikonisierte Schicht von 4
- 5: Klebebeschichtung auf 4
- 6: Wärmestrahler
- 7: Temperaturfühler

- D4a: Dicke von 4a
- D4b: Dicke von 4b

## Patentansprüche

1. Thermisch isolierendes technisches Klebeband (1), vorzugsweise zum Umhüllen von langgestrecktem Gut, wie insbesondere Leitungen (2) oder Kabelsätzen, mit einem bandförmigen Träger (4), der aus einem Verbund von mindestens einer ersten Schicht (4a) und mindestens einer zweiten Schicht (4b) besteht, wobei die erste Schicht (4a) eine metalische Schicht ist, und mit einer zumindest auf einer Seite des Trägers (4) aufgebrachten druckempfindlichen Klebebeschichtung (5),
**dadurch gekennzeichnet, dass** die zweite Schicht (4b)des Trägers (4) aus einem textilen Polyester-Trägermaterial besteht, das eine Schmelztemperatur von mindestens 175 °C aufweist.

2. Klebeband (1) nach Anspruch 1,
**dadurch gekennzeichnet, dass** die Klebebeschichtung (5) aus einem synthetischen acrylathaftigen, vorzugsweise UV-vemetzbaren, Haftklebstoff besteht.

3. Klebeband (1) nach einem der Ansprüche 1 oder 2,
**dadurch gekennzeichnet, dass** die Klebebeschichtung (5) mit einer Grammatur von nicht mehr als 120 g/m², vorzugsweise von 50 g/m² bis 100 g/m², auf den Träger (4) aufgebracht ist.

4. Klebeband (1) nach einem der Ansprüche 1 bis 3,
**dadurch gekennzeichnet, dass** der Träger (4) und/oder die Klebebeschichtung (5), beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet ist/sind.

5. Klebeband (1) nach einem der Ansprüche 1 bis 4,
**dadurch gekennzeichnet, dass** der Träger (4) auf der der Klebebeschichtung (5) abgewandten Seite, Insbesondere auf der Oberfläche der ersten, metallischen Schicht (4a), vorzugsweise mit einer Grammatur im Bereich von 0,5 g/m² bis 1,5 g/m², silikonisiert (4c) ist.

6. Klebeband (1) nach einem der Ansprüche 1 bis 5,
**dadurch gekennzeichnet, dass** die erste Schicht (4a) des Trägers (4) aus einer Aluminiumfolie mit einer Dicke (D4a) im Bereich von 5 µm bis 50 µm besteht.

7. Klebeband (1) nach einem der Ansprüche 1 bis 5,
**dadurch gekennzeichnet, dass** die erste Schicht (4a) des Trägers (4) aus aufgedampften Aluminium mit einer Dicke (D4a) im Bereich von 5 nm bis 50 nm besteht.

8. Klebeband (1) nach einem der Ansprüche 1 bis 7,
**dadurch gekennzeichnet, dass** die zweite Schicht (4b) des Trägers (4) aus einem Gewebe, insbesondere aus einem Polyestergewebe, mit einem Flächengewicht im Bereich von 40 g/m² bis 150 g/m² besteht.

9. Klebeband (1) nach einem der Ansprüche 1 bis 8,
**dadurch gekennzeichnet, dass** die zweite Schicht (4b) des Trägers (4) aus einem Vlies, insbesondere einem PET-Nähvlies, mit einem Flächengewicht im Bereich von 4.0 g/m² bis 220 g/m² besteht.

10. Klebeband (1) nach einem der Ansprüche 1 bis 9,
**dadurch gekennzeichnet, dass** das Klebeband (1) zumindest in Querrichtung von Hand einreissbar ist

11. Klebeband (1) nach einem der Ansprüche 1 bis 10,
**dadurch gekennzeichnet, dass** die Reissfestigkeit in Längsrichtung mindestens 15 N/cm beträgt und vorzugsweise im Bereich von 15 N/cm bis 70 N/cm liegt.

12. Klebeband (1) nach einem der Ansprüche 1 bis 11,
**gekennzeichnet durch** eine Abriebbeständigkeit nach ISO 6722, die bei einlagiger Messung **durch** eine Anzahl von Hüben von mehr als 800, inbesondere von 1500 bis 2000, beschrieben ist.

13. Klebeband (1) nach einem der Ansprüche 1 bis 12,
**gekennzeichnet durch** eine Geräuschdämpfung nach BMW GS 95008-3, die bei einlagiger Messung **durch** einen Wert von mehr als 3 dB (A), insbesondere 5 dB (A) bis 6 dB (A), beschrieben ist

14. Kabelbaum (3), umfassend mehrere, jeweils mit einer Isolierung (2a) versehene, inbesondere elektrische, Leitungen (2) und ein Klebeband (1), mit dem diese Leitungen (2) umwickelt sind,
**dadurch gekennzeichnet, dass** das Klebeband (1) die Merkmale eines der Ansprüche 1 bis 13 aufweist

15. Kabelbaum nach Anspruch 14,
**dadurch gekennzeichnet, dass** die Isolierungen (2a) der Leitungen (2) aus einem thermoplastischen Kunststoff, wie PVC oder PP oder aus strahlenvemetztem PE, bestehen.

## Claims

1. A thermally insulating industrial adhesive tape (1), preferably for winding around elongate material, such as in particular lines (2) or cable sets, with a belt-shaped backing (4) which consists of a composite of at least one first layer (4a) and at least one second layer (4b), the first layer (4a) being a metallic layer, and with a pressure-sensitive adhesive coating (5) applied at least on one side of the backing (4), **characterised in that** the second layer (4b) of the backing (4) consists of a textile polyester backing material which has a melting temperature of at least 175°C.

2. An adhesive tape (1) according to Claim 1, **characterised in that** the adhesive coating (5) consists of a synthetic, acrylate-containing, preferably UV-cross-linkable, pressure-sensitive adhesive.

3. An adhesive tape (1) according to Claim 1 or 2, **characterised in that** the adhesive coating (5) is applied to the backing (4) with an applied weight of not more than 120 g/m², preferably of 50 g/m² to 100 g/m².

4. An adhesive tape (1) according to one of Claims 1 to 3, **characterised in that** the backing (4) and/or the adhesive coating (5) is provided with a flame-retardant finish, for example with the aid of a flameproofing agent consisting of ammonium polyphosphate, magnesium hydroxide and/or aluminium hydroxide, or with the aid of a chlorinated paraffin, optionally in combination with antimony trioxide.

5. An adhesive tape (1) according to one of Claims 1 to 4, **characterised in that** the backing (4) is siliconised (4c), preferably with an applied weight in the range from 0.5 g/m² to 1.5 g/m², on the side remote from the adhesive coating (5), in particular on the surface of the first, metallic, layer (4a).

6. An adhesive tape (1) according to one of Claims 1 to 5, **characterised in that** the first layer (4a) of the backing (4) consists of an aluminium foil with a thickness (D4a) in the range from 5 µm to 50 µm.

7. An adhesive tape (1) according to one of Claims 1 to 5, **characterised in that** the first layer (4a) of the backing (4) consists of vapour-deposited aluminium with a thickness (D4a) in the range from 5 nm to 50 nm.

8. An adhesive tape (1) according to one of Claims 1 to 7, **characterised in that** the second layer (4b) of the backing (4) consists of a woven fabric, in particular of a polyester woven fabric, with a weight per unit area in the range from 40 g/m² to 150 g/m².

9. An adhesive tape (1) according to one of Claims 1 to 7, **characterised in that** the second layer (4b) of the backing (4) consists of a non-woven fabric, in particular a PET stitched non-woven, with a weight per unit area in the range from 40 g/m² to 220 g/m².

10. An adhesive tape (1) according to one of Claims 1 to 9, **characterised in that** the adhesive tape (1) can be torn by hand at least in the transverse direction.

11. An adhesive tape (1) according to one of Claims 1 to 10, **characterised in that** the tear strength in the longitudinal direction is at least 15 N/cm and preferably in the range from 15 N/cm to 70 N/cm.

12. An adhesive tape according to one of Claims 1 to 11, **characterised by** an abrasion resistance in accordance with ISO 6722 which for one-layer measurement is described by a number of strokes of more than 800, in particular from 1500 to 2000.

13. An adhesive tape (1) according to one of Claims 1 to 12, **characterised by** a noise reduction according to BMW GS 95008-3 which for one-layer measurement is described by a value of more than 3 dB (A), in particular 5 dB (A) to 6 dB (A).

14. A cable harness (3), comprising a plurality of in particular electrical lines (2) each provided with an insulation (2a) and an adhesive tape (1) which is wound around these lines (2), **characterised in that** the adhesive tape (1) has the features of one of Claims 1 to 13.

15. A cable harness according to Claim 14, **characterised in that** the insulations (2a) of the lines (2) consist of a thermoplastic material, such as PVC or PP, or of radiation-cross-linked PE.

## Revendications

1. Ruban adhésif technique (1) thermiquement isolant, de préférence pour gainer des produits allongés, tels que, en particulier, des conducteurs (2) ou des harnais de câbles, ce ruban comprenant un support (4) en forme de ruban qui se compose d'un assemblage d'au moins une première couche (4a) et d'au moins une deuxième couche (4b), dans lequel la première couche (4a) est une couche métallique, et comprenant un revêtement adhésif (5) sensible à la pression, appliqué sur au moins une face du support (4),
**caractérisé en ce que** la deuxième couche (4b) du support (4) se compose d'un matériau de support textile d'un polyester qui présente une température de fusion d'au moins 175 °C.

2. Ruban adhésif (1) selon la revendication 1, **caractérisé en ce que** le revêtement adhésif (5) se compose d'une colle auto-adhésive synthétique, contenant de l'acrylate et de préférence réticulable par UV.

3. Ruban adhésif (1) selon l'une quelconque des revendications 1 ou 2, **caractérisé en ce que** le revêtement adhésif (5) est appliqué au support (4) avec un grammage de pas plus de 120 g/m², de préférence de 50 g/m² à 100 g/m².

4. Ruban adhésif (1) selon l'une quelconque des revendications 1 à 3, **caractérisé en ce que** le support (4) et/ou le revêtement adhésif (5) est/sont préparé(s) de façon ignifuge à l'aide d'un produit pare-flammes composé de polyphosphate d'ammonium, d'hydroxyde de magnésium et/ou d'hydroxyde d'aluminium, ou à l'aide d'une paraffine chlorée, éventuellement en combinaison avec du trioxyde d'antimoine.

5. Ruban adhésif (1) selon l'une quelconque des revendications 1 à 4, **caractérisé en ce que** le support (4) est siliconé (4c) sur la face détournée du revêtement adhésif (5), en particulier sur la surface de la première couche métallique (4a), de préférence avec un grammage dans la plage de 0,5 g/m² à 1,5 g/m².

6. Ruban adhésif (1) selon l'une quelconque des revendications 1 à 5, **caractérisé en ce que** la première couche (4a) du support (4) se compose d'un film d'aluminium d'une épaisseur (D4a) dans la plage de 5 µm à 50 µm.

7. Ruban adhésif (1) selon l'une quelconque des revendications 1 à 5, **caractérisé en ce que** la première couche (4a) du support (4) se compose d'aluminium déposé par vaporisation d'une épaisseur (D4a) dans la plage de 5 nm à 50 nm.

8. Ruban adhésif (1) selon l'une quelconque des revendications 1 à 7, **caractérisé en ce que** la deuxième couche (4b) du support (4) se compose d'un tissu, en particulier d'un tissu de polyester, d'un grammage dans la plage de 40 g/m² à 150 g/m².

9. Ruban adhésif (1) selon l'une quelconque des revendications 1 à 7, **caractérisé en ce que** la deuxième couche (4b) du support (4) se compose d'un non-tissé, en particulier d'un non-tissé cousu en PET, d'un grammage dans la plage de 40 g/m² à 220 g/m².

10. Ruban adhésif (1) selon l'une quelconque des revendications 1 à 9, **caractérisé en ce que** le ruban adhésif (1) peut être déchiré à la main au moins dans la direction transversale.

11. Ruban adhésif (1) selon l'une quelconque des revendications 1 à 10, **caractérisé en ce que** la résistance à la déchirure dans la direction longitudinale est d'au moins 15 N/cm et se situe de préférence dans la plage de 15 N/cm à 70 N/cm.

12. Ruban adhésif (1) selon l'une quelconque des revendications 1 à 11, **caractérisé par** une résistance à l'usure selon ISO 6722 qui est décrite pour une mesure à un passage par un nombre de coups supérieur à 800, en particulier de 1500 à 2000.

13. Ruban adhésif (1) selon l'une quelconque des revendications 1 à 12, **caractérisé par** un amortissement de bruit selon BMW GS 95008-3 qui est décrit pour une mesure à un passage par une valeur supérieur à 3 dB (A), en particulier de 5 dB (A) à 6 dB (A).

14. Faisceau de câbles (3), comprenant plusieurs conducteurs (2), en particulier électriques, entourés d'une isolation (2a), et un ruban adhésif (1) par lequel ces conducteurs (2) sont enrobés,
**caractérisé en ce que** le ruban adhésif (1) présente les particularités de l'une quelconque des revendications 1 à 13.

15. Faisceau de câbles selon la revendication 14, **caractérisé en ce que** les isolations (2a) des conducteurs (2) se composent d'une matière plastique thermoplastique, comme le PVC ou le PP ou de PE réticulé par irradiation.
